Europäisches Patentamt

**European Patent Office**

Office européen des brevets

(11) Publication number: **0 222 706**
A2

# EUROPEAN PATENT APPLICATION

(21) Application number: 86830228.2

(22) Date of filing: 06.08.86

(51) Int. Cl.⁴: **F 16 B 7/04**
F 16 B 12/40

(30) Priority: 07.08.85 IT 947385

(43) Date of publication of application:
20.05.87 Bulletin 87/21

(84) Designated Contracting States:
AT BE CH DE FR GB LI NL SE

(71) Applicant: Targetti, Giampaolo
Via Barbacane 29
I-50133 Firenze(IT)

(72) Inventor: Targetti, Giampaolo
Via Barbacane 29
I-50133 Firenze(IT)

(74) Representative: Mannucci, Gianfranco, Dott.-Ing.
Ufficio Tecnico Ing. A. Mannucci Via della Scala 4
I-50123 Firenze(IT)

(54) Expansion clamp to connect abutting hollow components together.

(57) Between at least two stiff elements (11, 13), that are shaped in correspondence to opposed portions of the hollows of the components (1, 3) to be connected, elastic means (21) are interposed in order to urge the mutual spacing: dap or fitting means (15, 17) are provided on said elements (11, 13), which means are suitable for cooperating with the components (1, 3) to be connected for the axial fastening, thereof and means (23) are further provided that are suitable for assuring between the two said elements a rigid arrangement of maximum expansion after the settlement at the inside of the abutting components (1, 3).

Fig.1

DESCRIPTION

The invention relates to a device that is of use for carrying out the connection between abutting and concurring ends of hollow and especially tubular components, for reticular structures and other applications; this device is suitable for assuring a very stable connection and also a continuity of the abutting components without any particular prominence but with a practically uniform development of the connection between the two components.

For this purpose, the device for the connection between concurring ends of hollow and especially tubular components (for reticular structures or other), according to the invention substantially includes: at least two stiff elements being shaped in correspondence to the opposed portions of the hollows of the components to be connected; elastic means interposed between said elements to cause the mutual spacing; on said elements dap or fitting means being suitable for cooperating with the components to be connected, for the axial fastening and means suitable for assuring a rigid arrangement of maximum expansion between the two said elements after the settlement at the inside of the abutting components.

The dap or fitting means may consist of stakes protruding from said elements, and suitable for being received on seats - such as through holes - of the components.

The means suitable for assuring the arrangement of maximum expansion can be in practice screw means, acting perpendicularly to the development of said elements. Such a screw means can be placed at a central position on said elements, and can be received on opposed hollows of the terminal edges of the abutting elements.

Said elements can be either straight-line, for the connection of components whose ends are aligned, or angulated - or curved - for the connection between components wherein the ends to be connected are in angulated position or are curved.

The invention will be better understood by following the description and the enclosed drawing, that shows a practical non-limitative embodiment of the invention itself:

Figs.1, 2, 3 and 4 show a longitudinal section, a view from line II-II of Fig.1 and sections according to III-III and IV-IV of Fig.1, to illustrate a clamp embodiment;

Fig.5 shows a separate view of the clamp and the end of one of the components concurring for the connection;

Figs.6, 7 and 8 show three modified embodiments of the clamp according to the invention;

Figs.9 and 10 show further possible embodiments; and

Fig.11 shows a local section according to XI-XI of Fig.10.

According to what is illustrated in the enclosed drawing, 1 and 3 indicate respectively two components of a structure, which components must be coaxially abutting each one on the continuation of the other. Each component, as that indicated by 1, has a tubular configuration and along the edge of the end, has a hollow 7 and, at a certain distance from the edge, a pair of opposite holes 9.

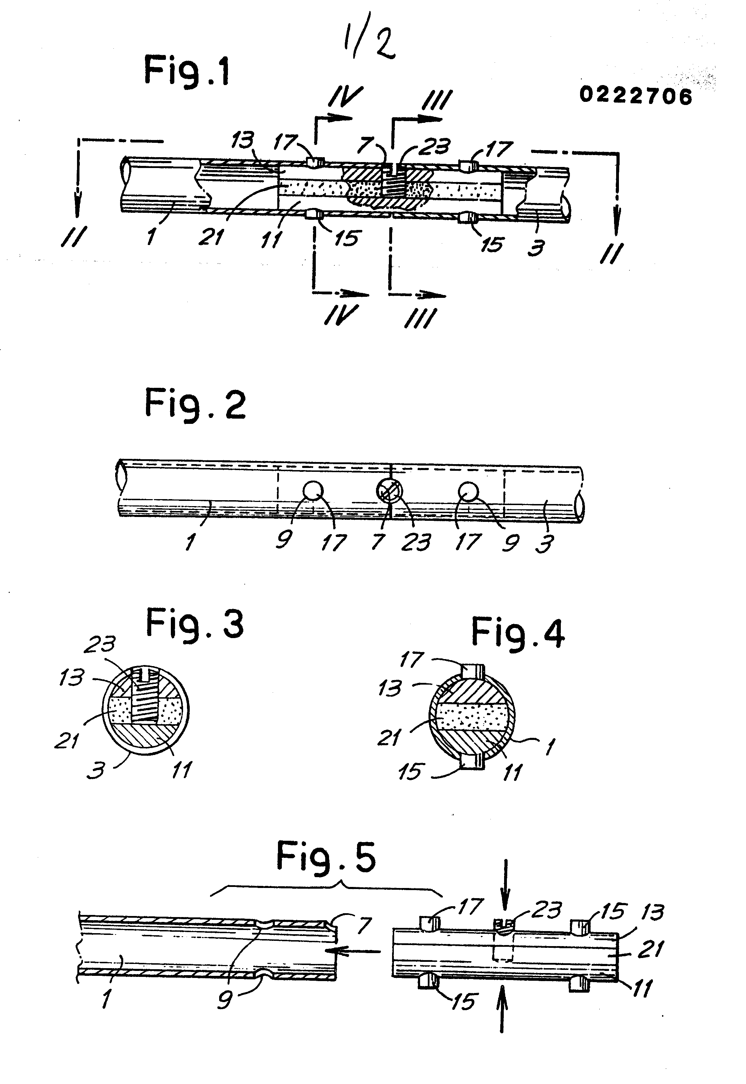

The clamp device according to the invention is made up of two stiff elements 11 and 13 having straight line development and with cross section shaped as a circle segment as is apparent on the sections of Figs.3 and 4. Each one of these two elements has a couple of pegs or stakes indicated by 15 and 17 respectively, whose distance is twice the distance between the holes 9 and the edges of each tubular component 1 and 3. The two elements 11 and 13 are coupled with each other through an elastic member 21 interposed between them; this member, according to Figs.1 to 5, is developed as a shim or a layer of an elastomer such as rubber or other material having suitable characteristics. The two elements 11 and 13, through the compression and the crushing of the shim 21, can come together sufficiently enough to permit the insertion of the ensemble (including stakes 15 and 17) in the inside of each end of the components 1 and 3, axially concurring to each other. In this way the device 11, 13, 21 can be inserted in the axial hollows of the tubular components 1 and 3 to achieve the abutting of the terminal edges of the same tubular components 1 and 3; the stakes 15 and 17, corresponding each other according to a transversal direction, find their seats on the opposite holes 9 of each one of the two components 1 and 3. In this way the clamp device can limitedly expand again owing to the elastic expansion of the shim 21, thus engaging the stakes 15 and 17 to the components 1 and 3 by means of the holes 9; the height of stakes 15 and 17 can be so limited that they do not protrude beyond the external developments of the components 1 and 3, although the whole thickness of holes 9 is engaged. The two hollows or notches 7 of the abutting components 1 and 3 correspond to each other; in correspondence to the access space so achieved it is possible to handle a screw 23, that is engaged on one of the two elements, such as the element 13, centrally or in anyway at an intermediate position, and that, by crossing the shim 21, can act by its internal end on the other of said elements, such as the element 11. When the screw 23 is drawn back from the element 11, the compression of the shim 21 is permitted; after the fitting of the clamp device on the inside of the two concurring and aligned components 1 and 3, the screw can be handled through the opening formed by the two hollows 7, in order to be forced against the element 11, thus causing a forced expansion between the two elements 11 and 13 and then a rigid forcing of the two elements 11 and 13 against the internal walls of the components 1 and 3 in abutting disposition for the coupling. It is then possible to carry out a rigid connection in cooperation with the elastic coupling established by the shim 21, which always causes a residue compression to cooperate to the stabilization of the connection.

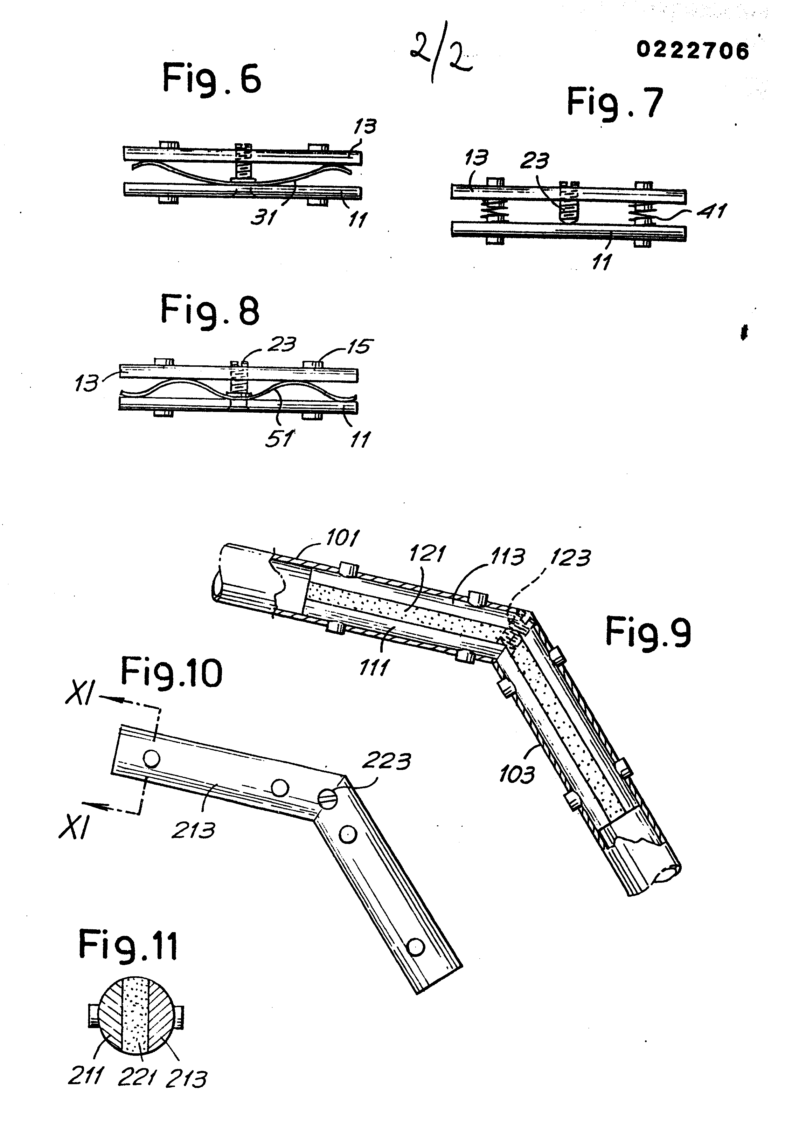

Figs.6, 7 and 8 show some modified embodiments being equivalent to the embodiment of Figs.1 to 5, according to which embodiments the elastic means that are interposed between the elements 11 and 13 are modified, these elastic means consisting of an elastic leaf spring 31, respectively of helicoidal springs (which can also find partial seats on hollows of the elements 11 and 13) respectively of annular corrugated springs 51.

In the embodiment of Fig.9 two components 111 and 113 are provided, that are analogous to the elements 11 and 13, but that have an angulated development to permit the coupling of components 101 and 103 converging towards each other but with a certain mutual slant. In this
embodiment the elastic shim 121 (equivalent to the
shim 21) is interposed between the two components 111
and 113, being in contact with these components along
surfaces that are perpendicular to the plane wherein
the axes of each one of the concurring components 101
and 103 are placed. In this case the forcing screw
123 (equivalent to screw 23) is placed with its axis
corresponding to the bisector of the axes of the two
components 101 and 103. As for the rest, the form and
the function of the clamp are equal to what has been
already illustrated.

In the embodiment of Figs.10 and 11 another
arrangement is provided, according to which the two
elements 211 and 213 are shaped in correspondence to
the mutual slant of the two components to be coupled
and the elastic shim 221, otherwise analogous to the
shim 21 or 121, is interposed and in contact with
surfaces of the elements 211 and 213 which lie on planes
that are parallel to the plane containing the axes of
the two components to be coupled. In this case the forcing
screw 223 is placed with its axis that is perpendicular
to said plane, which is formed by the axes of the two
components being concurring and angulated between each
other. As for the rest the shape and the function are the same as what has been already described.

In any case a clamp device is obtained, which results in being particularly stable, particularly simple to be mounted and which avoids prominences and bosses in respect to the components that it couples; by this way a substantial aesthetical continuity between the various coupled components is assured.

It is understood that the drawing shows an example given only as a practical demonstration of the invention, being the invention able to vary in the forms and dispositions without departing from the scope of the invention itself.

## C L A I M S

1) A device for the connection between concurring ends of hollow and especially tubular components, for reticular structures and other applications, characterized in that it includes; at least two stiff elements that are shaped in correspondence to opposed portions of the hollows of the components to be connected; elastic means being interposed between said elements to urge the mutual spacing; on said elements, dap or fitting means suitable for cooperating with the components to be connected, for the axial fastening thereof; and means suitable for assuring a rigid arrangement of maximum expansion between the two said elements after the settlement at the inside of the abutting components.

2) A device as per the previous claim, characterized in that the dap or fitting means consist of stakes protruding from said elements, and suitable for being received on seats - such as through holes - of the components.

3) A device as per the previous claims, characterized in that the means suitable for assuring the arrangement of maximum expansion are screw means, acting perpendicularly to the development of said elements.

4) A device as per claim 3, characterized in that a screw means is placed at a central position of the length of said elements, and is received on opposed hollows of the end of the edges of the abutting elements.

5) A device as per the previous claims, characterized in that said elements are straight line for the connection of components having the ends aligned each other, or angulated - or curved - for the connection between components having the ends to be connected, with an angulated positioning, or curved.

6) An expansion clamp device for the connection of concurring ends of hollow components of reticular structures or other; all as above described and represented for exemplification in the enclosed drawing.

1/2

0222706

Fig.1

Fig.2

Fig.3

Fig.4

Fig.5

Fig.6

Fig.7

Fig.8

Fig.9

Fig.10

Fig.11